# EUROPEAN PATENT APPLICATION

(11) **EP 4 618 199 A1**
(43) Date of publication of application: **17.09.2025**
(21) Application number: 23922486.8
(22) Date of filing: 13.12.2023
(51) Int. Cl.: H01M 4/66, H01M 4/36, H01M 4/13, H01M 10/054

(54) **CURRENT COLLECTOR, SECONDARY BATTERY, BATTERY MODULE, BATTERY PACK, AND ELECTRIC DEVICE**

(30) Priority: 15.02.2023 CN 202310120204
(71) Applicant: Contemporary Amperex Technology (Hong Kong) Limited, Hong Kong (HK)
(72) Inventor: LIU, Ben, Ningde, Fujian 352100 (CN); OUYANG, Chuying, Ningde, Fujian 352100 (CN); ZHANG, Xinxin, Ningde, Fujian 352100 (CN); GUO, Bingkun, Ningde, Fujian 352100 (CN); LI, Xiaolong, Ningde, Fujian 352100 (CN); YAO, Shikang, Ningde, Fujian 352100 (CN); CHEN, Xiaoxia, Ningde, Fujian 352100 (CN); CHEN, Shigang, Ningde, Fujian 352100 (CN); LAN, Jiadian, Ningde, Fujian 352100 (CN); LIN, Wenguang, Ningde, Fujian 352100 (CN)
(74) Representative: Gong, Jinping
(86) International application number: PCT/CN2023/138519
(87) International publication number: WO 2024/169370

(57) **Abstract**

A current collector with a coating, a secondary battery, a battery module, a battery pack, and an electrical device are disclosed. The coating includes at least a surface modification layer. The coating is formed on at least one side of the current collector. A thickness of the surface modification layer is 100 nm to 10 µm. The coating formed on at least one side of the current collector can effectively block direct contact between a negative electrode metal and an electrolyte solution constituent, thereby reducing side reactions between the negative electrode metal and the electrolyte solution, significantly reducing gas generated by the battery during cycling, and improving the cycle performance and safety of the battery.

## Description

### CROSS-REFERENCE TO RELATED APPLICATIONS

This application claims priority to Chinese Patent Application No. 202310120204.8, filed on February 15, 2023 and entitled "CURRENT COLLECTOR, SECONDARY BATTERY, BATTERY MODULE, BATTERY PACK, AND ELECTRICAL DEVICE", which is incorporated herein by reference in its entirety.

### TECHNICAL FIELD

This application relates to the technical field of secondary batteries, and in particular, to a current collector, a secondary battery, a battery module, a battery pack, and an electrical device.

### BACKGROUND

In recent years, secondary batteries have been widely applied in energy storage power systems such as hydro, thermal, wind, and solar power stations, and in many other fields such as electric tools, electric bicycles, electric motorcycles, electric vehicles, military equipment, and aerospace.

The performance of a secondary battery depends largely on the interfacial chemical properties of the battery. However, during repeated charge-discharge cycles, the interfacial chemical properties deteriorate due to side reactions between an electrode and an electrolyte solution, thereby resulting in a storage performance decline and capacity fading of the secondary battery, and giving rise to severe safety hazards.

### SUMMARY

This application is developed in view of the above subject-matter, and an objective of this application is to provide a current collector with a coating to reduce the gas generated by the battery and improve safety of the battery.

According to a first aspect of this application, a current collector with a coating is provided. The coating includes at least a surface modification layer. The coating is formed on at least one side of the current collector. A thickness of the surface modification layer is 100 nm to 10 µm.

The surface modification layer can block the direct contact between a negative active material (such as a negative electrode metal) and an electrolyte solution, reduce side reactions between the metal and the electrolyte solution, significantly reduce gas production, effectively reduce the expansion rate of the battery, and improve the cycle capacity retention rate of the battery.

In any embodiment, the thickness of the surface modification layer is 100 nm to 500 nm.

Controlling the thickness of the surface modification layer within the range of 100 nm to 500 nm ensures good conductivity and specified mechanical strength of the current collector, facilitates transmission of electrons between components of the battery, and improves the interface stability, cycle performance, and safety of the battery. When the surface modification layer is excessively thin, the surface modification layer is unable to resist the volume change on the negative electrode side during charge and discharge, and is prone to rupture and fail, thereby re-initiating gas production caused by reaction. When the surface modification layer is excessively thick, the surface modification layer hinders the transmission of metal ions, increases the interface impedance, and aggravates the interface polarization of the battery, thereby resulting in a decline in the cycle performance and energy density of the battery. The surface modification layer falling within the above thickness range can provide a deposition framework for the negative electrode material in an anode-free secondary battery, thereby further improving the electrochemical performance of the anode-free battery.

In any embodiment, a density of the surface modification layer is 1.7 to 5.5 g/cm³, and optionally 2.5 to 5.2 g/cm³.

When the density of the surface modification layer is 1.7 to 5.5 g/cm³, it is ensured that a uniform and dense surface modification layer is formed on the surface of the current collector, thereby forming an effective physical barrier between the electrolyte solution and the negative electrode metal, preventing side reactions between the electrolyte solution and the negative electrode metal, and improving the interface stability, cycle performance, and safety of the battery.

When the density of the surface modification layer is 2.5 to 5.2 g/cm³, the surface modification layer can provide an effective physical shielding effect and form an effective physical barrier between the electrolyte solution and the negative electrode metal, prevent side reactions between the electrolyte solution and the negative electrode metal, and improve the interface stability, cycle performance, and safety of the battery, and can also provide an effective deposition framework so that the deposited negative electrode material can be deposited inside the surface modification layer, thereby improving the effect of alloying between the metal material in the surface modification layer and the negative electrode material.

In any embodiment, the surface modification layer includes one or more of zinc oxide, aluminum oxide, titanium oxide, tin oxide, zirconium oxide, silicon oxide, or antimony oxide.

With the surface modification layer formed on at least one side of the current collector and containing one or more of zinc oxide, aluminum oxide, titanium oxide, tin oxide, zirconium oxide, silicon oxide, or antimony oxide, a stable, ionically conductive and electronically insulating solid electrolyte interface (SEI) can be constructed on the surface of the current collector to block the reaction between the electrolyte solution and the deposited sodium metal, thereby reducing the gas generated due to the side reactions between the electrolyte solution and the deposited sodium metal, and improving the cycle stability and safety of the battery. In addition, the surface modification layer is of good stability and does not react with the electrolyte solution, thereby further improving the safety of the battery.

In any embodiment, the surface modification layer includes one or more of tin oxide or antimony oxide.

The tin oxide and antimony oxide in the surface modification layer can alloy with the sodium element deposited in the anode-free secondary battery, thereby further improving the cycle performance of the battery.

In any embodiment, at 25 °C, a contact angle of a monoglyme solution on the current collector with the coating is less than 50°, where the monoglyme solution contains sodium hexafluorophosphate at a concentration of 1 mol/L.

The deposition of the surface modification layer improves the effect of the electrolyte solution in infiltrating the surface of the current collector, reduces interface polarization, greatly reduces interface impedance, and improves the cycle capacity retention rate of the battery.

In any embodiment, the surface modification layer is prepared by magnetron sputtering.

By means of magnetron sputtering, a surface modification layer of high mechanical strength and good ionic conductivity can be formed on the surface of the current collector. The surface modification layer can block direct contact between the negative electrode metal and the electrolyte solution constituent, reduce production of a large amount of gas caused by side reactions between the negative electrode metal and the electrolyte solution, and improve safety of the battery. In addition, the surface modification layer prepared by magnetron sputtering is stable in nature and does not react with the electrolyte solution, thereby facilitating uniform deposition of metal ions, improving the interface stability of the battery, reducing interface impedance, and improving the cycle capacity retention rate of the battery.

In any embodiment, in the magnetron sputtering, a radio frequency power is 40 to 120 W, and a sputtering time is 30 s to 20 min.

When the radio frequency power of magnetron sputtering is 40 to 120 W and the sputtering time is 30 s to 20 min, a uniform, dense and stable surface modification layer can be formed on the surface of the current collector. The surface modification layer can block direct contact between the negative electrode metal and the electrolyte solution constituent, reduce production of a large amount of gas caused by side reactions between the negative electrode metal and the electrolyte solution, and improve safety of the battery.

In any embodiment, the surface modification layer is in direct contact with a surface of the current collector.

In any embodiment, the coating further includes a deposition-inducing layer. The deposition-inducing layer and the surface modification layer are sequentially arranged in a direction directed away from the current collector.

The deposition-inducing layer and the surface modification layer are sequentially arranged on the current collector, thereby reducing the nucleation overpotential of metal ions, inducing uniform deposition of metal ions, regulating the deposition of metal ions, suppressing dendrites, and also reducing the contact between metal and electrolyte solution, and in turn, reducing side reactions between the metal and the electrolyte solution, and effectively improving the safety and cycle capacity retention rate of the battery.

In any embodiment, the deposition-inducing layer includes a carbon material.

The deposition-inducing layer containing a carbon material favorably reduces the nucleation overpotential of metal ions, and improves the Coulombic efficiency and cycle capacity retention rate of the battery.

In any embodiment, the current collector includes at least one of metal foil, a metal foam current collector, or a metal mesh current collector.

The above current collectors are of high tensile strength and ductility, and are conducive to the stability and safety of the battery.

A second aspect of this application provides a secondary battery. The secondary battery includes a negative electrode plate. The negative electrode plate includes the current collector disclosed in any one of the above embodiments.

The secondary battery achieves superior cycle performance.

In any embodiment, the secondary battery is a sodium secondary battery.

In any embodiment, the secondary battery is an anode-free sodium secondary battery. The anode-free sodium secondary battery can possess a high energy density.

In any embodiment, the secondary battery includes a positive electrode plate. A ratio of the thickness of the surface modification layer to a loading amount of a positive active material per unit area of the positive electrode plate is 50 to 500 nm·cm²/mAh.

When the ratio of the thickness of the surface modification layer to the loading amount of the positive active material per unit area of the positive electrode plate is 50 to 500 nm·cm²/mAh, it is ensured that the surface modification layer is of good ionic conductivity, electronic insulativity, and high mechanical strength, thereby reducing side reactions between the electrode metal and the electrolyte solution, and improving the safety of the battery. In addition, the surface modification layer can effectively block the solvated molecules from penetrating to the negative electrode surface, and is of high ionic conductivity, thereby ensuring that the desolvated metal ions can quickly pass through the surface modification layer to reach the negative electrode surface at which the metal ions are reduced to metal by receiving electrons, thereby improving the cycle performance of the battery. In addition, the surface modification layer is of good mechanical strength, and can withstand the volume change of the negative electrode metal during charge and discharge without rupture or failure, thereby preventing re-initiation of gas production caused by reaction, and ensuring the safety of the battery during high-temperature cycling or a long period of cycling.

In any embodiment, the secondary battery includes an electrolyte solution. The electrolyte solution includes a sodium salt. The sodium salt includes one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, or sodium bis(trifluoromethanesulfonyl)imide.

In any embodiment, after the secondary battery is charged and discharged for 50 cycles, based on a total mass of the electrolyte solution, an aggregate mass percent of elements Zn, Al, Ti, Sn, Zr, Si, and Sb in the electrolyte solution is less than 0.0001%.

When the aggregate mass percent of the elements Zn, Al, Ti, Sn, Zr, Si, and Sb in the electrolyte solution of the secondary battery based on the total mass of the electrolyte solution is less than 0.0001% after 50 charge-discharge cycles, it is definite that the surface modification layer is of good electrochemical stability, and will neither react with the electrolyte solution during the charge-discharge cycles nor fall off from the current collector surface due to dissolution in the electrolyte solution. Therefore, the surface modification layer can effectively block the reaction between the electrolyte solution and the deposited metal, and improve the cycle stability and safety of the battery.

A third aspect of this application provides a battery module. The battery module includes the secondary battery according to the second aspect of this application.

A fourth aspect of this application provides a battery pack. The battery pack includes the secondary battery according to the second aspect of this application or the battery module according to the third aspect of this application.

A fifth aspect of this application provides an electrical device. The electrical device includes at least one of the secondary battery according to the second aspect of this application, the battery module according to the third aspect of this application, or the battery pack according to the fourth aspect of this application.

### BRIEF DESCRIPTION OF DRAWINGS

FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of a battery module according to an embodiment of this application;
FIG. 4 is a schematic diagram of a battery pack according to an embodiment of this application;
FIG. 5 is an exploded view of the battery pack shown in FIG. 4 according to an embodiment of this application; and
FIG. 6 is a schematic diagram of an electrical device that uses a secondary battery as a power supply according to an embodiment of this application.

List of reference numerals:
1. battery pack; 2. upper box; 3. lower box; 4. battery module; 5. secondary battery; 51. housing; 52. electrode assembly; 53. cover plate.

### DETAILED DESCRIPTION

The following describes and discloses in detail embodiments of a current collector, a secondary battery, a battery module, a battery pack, and an electrical device according to this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values, and a lower limit of one range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a numerical range "0 to 5" herein means all real numbers recited between 0 and 5 inclusive, and the expression "0 to 5" is just a brief representation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on.

Unless otherwise expressly specified herein, any embodiments and optional embodiments hereof may be combined with each other to form a new technical solution.

Unless otherwise expressly specified herein, any technical features and optional technical features hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, "include" and "comprise" mentioned herein mean open-ended inclusion, or closed-ended inclusion. For example, the terms "include" and "comprise" may mean inclusion of other items that are not recited, or inclusion of only the items recited.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

A metallic secondary battery is a secondary battery that uses a metal material (such as lithium, sodium, magnesium, potassium, or the like) as a negative electrode. The metal material on a negative current collector may be pre-deposited on a surface of the current collector as a negative active material, and may be deposited *in situ* on the surface of the current collector in a charge-discharge cycle. In other words, the metal secondary batteries include a sodium battery, a lithium battery, a magnesium battery, a potassium battery, and so on, each containing a negative active material, and also include an anode-free secondary battery. In an anode-free secondary battery, a negative current collector also serves as a negative electrode plate, and no negative active material is pre-deposited on the negative current collector. In an initial charge-discharge cycle, metal ions are deposited *in situ* on the negative current collector. A solid electrolyte interface (SEI) formed by chemical and electrochemical reactions between the metal negative electrode and the electrolyte solution is a decisive key factor to the long-term stability of the battery. However, during repeated charge-discharge cycles, the SEI formed on the surface of the metal negative electrode becomes unstable due to the volume change of the metal negative electrode, and some constituents are easily soluble in the electrolyte solution. The exposed metal directly contacts the electrolyte solution and undergoes side reactions. The gas produced by the side reactions accumulate continuously during the cycling and storage, thereby causing a decline in capacity and posing severe safety hazards.

### [Current collector]

In view of the above situation, this application provides a current collector with a coating. The coating includes at least a surface modification layer. The coating is formed on at least one side of the current collector. A thickness of the surface modification layer is 100 nm to 10 µm.

In some embodiments, the coating is not in direct contact with the current collector. The coating and the current collector are interspaced with another layer including but not limited to a negative active material layer as an example.

In some embodiments, the current collector with the coating serves as a negative current collector of a secondary battery.

In some embodiments, the coating is located on the surface of the current collector, and the current collector with the coating directly serves as a negative current collector of an anode-free secondary battery.

In some embodiments, the term "surface modification layer" means a layer formed by a physical or chemical method and configured to modify the surface status of the current collector.

In some embodiments, the coating further includes any layer other than the surface modification layer, including but not limited to, a deposition-inducing layer. The synergistic effect between different layers further improves the cycle stability of the secondary battery, especially the anode-free secondary battery.

The surface modification layer can block the direct contact between a negative active material (such as a negative electrode metal) and an electrolyte solution, reduce side reactions between the metal and the electrolyte solution, significantly reduce gas production, effectively reduce the expansion rate of the battery, and improve the cycle capacity retention rate of the battery.

In some embodiments, the thickness of the surface modification layer is 100 nm to 10 µm.

In some embodiments, the thickness of the surface modification layer is optionally 100 nm, 110 nm, 120 nm, 130 nm, 140 nm, 150 nm, 160 nm, 170 nm, 180 nm, 190 nm, 200 nm, 210 nm, 220 nm, 230 nm, 240 nm, 250 nm, 260 nm, 270 nm, 280 nm, 290 nm, 300 nm, 310 nm, 320 nm, 330 nm, 340 nm, 350 nm, 360 nm, 370 nm, 380 nm, 390 nm, 400 nm, 410 nm, 420 nm, 430 nm, 440 nm, 450 nm, 460 nm, 470 nm, 480 nm, 490 nm, 500 nm, 510 nm, 520 nm, 530 nm, 540 nm, 550 nm, 560 nm, 570 nm, 580 nm, 590 nm, 600 nm, 610 nm, 620 nm, 630 nm, 640 nm, 650 nm, 660 nm, 670 nm, 680 nm, 690 nm, 700 nm, 710 nm, 720 nm, 730 nm, 740 nm, 750 nm, 760 nm, 770 nm, 780 nm, 790 nm, 800 nm, 810 nm, 820 nm, 830 nm, 840 nm, 850 nm, 860 nm, 870 nm, 880 nm, 890 nm, 900 nm, 910 nm, 920 nm, 930 nm, 940 nm, 950 nm, 960 nm, 970 nm, 980 nm, 990 nm, 1 µm, 2 µm, 3 µm, 4 µm, 5 µm, 6 µm, 7 µm, 8 µm, 9 µm, or 10 µm.

Controlling the thickness of the surface modification layer within the range of 100 nm to 10 µm ensures good conductivity and specified mechanical strength of the current collector, facilitates transmission of electrons between components of the battery, and improves the interface stability, cycle performance, and safety of the battery. When the surface modification layer is excessively thin, the surface modification layer is unable to resist the volume change on the negative electrode side during charge and discharge, and is prone to rupture and fail, thereby re-initiating gas production caused by reaction. When the surface modification layer is excessively thick, the surface modification layer hinders the transmission of metal ions, increases the interface impedance, and aggravates the interface polarization of the battery, thereby resulting in a decline in the cycle performance and energy density of the battery.

In some embodiments, the thickness of the surface modification layer is 100 nm to 500 nm.

Controlling the thickness of the surface modification layer within the range of 100 nm to 500 nm ensures good conductivity and specified mechanical strength of the current collector, facilitates transmission of electrons between components of the battery, and improves the interface stability, cycle performance, and safety of the battery. When the surface modification layer is excessively thin, the surface modification layer is unable to resist the volume change on the negative electrode side during charge and discharge, and is prone to rupture and fail, thereby re-initiating gas production caused by reaction. When the surface modification layer is excessively thick, the surface modification layer hinders the transmission of metal ions, increases the interface impedance, and aggravates the interface polarization of the battery, thereby resulting in a decline in the cycle performance and energy density of the battery. The surface modification layer falling within the above thickness range can provide a deposition framework for the negative electrode material in an anode-free secondary battery, thereby further improving the electrochemical performance of the anode-free battery.

In some embodiments, a density of the surface modification layer is 1.7 to 5.5 g/cm³, and optionally 3.5 to 5.2 g/cm³.

In some embodiments, the density of the surface modification layer is 1.7 g/cm³, 1.8 g/cm³, 1.9 g/cm³, 2 g/cm³, 2.1 g/cm³, 2.2 g/cm³, 2.3 g/cm³, 2.4 g/cm³, 2.5 g/cm³, 2.6 g/cm³, 2.7 g/cm³, 2.8 g/cm³, 2.9 g/cm³, 3 g/cm³, 3.1 g/cm³, 3.2 g/cm³, 3.3 g/cm³, 3.4 g/cm³, 3.5 g/cm³, 3.6 g/cm³, 3.7 g/cm³, 3.8 g/cm³, 3.9 g/cm³, 4.0 g/cm³, 4.1 g/cm³, 4.2 g/cm³, 4.3 g/cm³, 4.4 g/cm³, 4.5 g/cm³, 4.6 g/cm³, 4.7 g/cm³, 4.8 g/cm³, 4.9 g/cm³, 5.0 g/cm³, 5.1 g/cm³, 5.2 g/cm³, 5.3 g/cm³, 5.4 g/cm³, or 5.5 g/cm³.

When the density of the surface modification layer is 1.7 to 5.5 g/cm³, it is ensured that a uniform and dense surface modification layer is formed on the surface of the current collector, thereby forming a physical barrier between the electrolyte solution and the negative electrode metal, preventing side reactions between the electrolyte solution and the negative electrode metal, and improving the interface stability, cycle performance, and safety of the battery.

When the density of the surface modification layer is 2.5 to 5.2 g/cm³, the surface modification layer can provide an effective physical shielding effect and form an effective physical barrier between the electrolyte solution and the negative electrode metal, prevent side reactions between the electrolyte solution and the negative electrode metal, and improve the interface stability, cycle performance, and safety of the battery, and can also provide an effective deposition framework, thereby producing an effect of alloying between the surface modification layer and the deposited negative electrode material.

In some embodiments, the surface modification layer includes one or more of zinc oxide (ZnO), aluminum oxide (Al₂O₃), titanium oxide (TiO₂), tin oxide (SnO₂), zirconium oxide (ZrO₂), silicon oxide (SiO₂), or antimony oxide (Sb₂O₃/Sb₂O₅)

With the surface modification layer formed on at least one side of the current collector and containing one or more of zinc oxide, aluminum oxide, titanium oxide, tin oxide, zirconium oxide, silicon oxide, or antimony oxide, a stable, ionically conductive and electronically insulating solid electrolyte interface (SEI) can be constructed on the surface of the current collector to block the reaction between the electrolyte solution and the deposited sodium metal, thereby reducing the gas generated due to the side reactions between the electrolyte solution and the deposited sodium metal, and improving the cycle stability and safety of the battery. In addition, the surface modification layer is of good stability and does not react with the electrolyte solution, thereby further improving the safety of the battery.

In some embodiments, the surface modification layer includes one or more of tin oxide or antimony oxide.

The tin oxide and antimony oxide alloy with the sodium element deposited in the anode-free secondary battery to generate a tin-sodium alloy or an antimony-sodium alloy, thereby further improving the cycle performance of the battery. In addition, the tin oxide and antimony oxide can reduce the nucleation overpotential of sodium, improve the uniformity of sodium deposition in the anode-free secondary battery, and improve the overall performance of the battery.

As used herein, the term "nucleation overpotential" means an additional potential required for nucleation of a metal ion, or a potential deviation of the metal ion from a potential at which the metal ion is deposited or stripped. This value is derived from a critical nucleation radius of the metal ion. In some embodiments, at 25 °C, a contact angle of a monoglyme solution on the current collector with the coating is less than 50°, where the monoglyme solution contains sodium hexafluorophosphate at a concentration of 1 mol/L.

The deposition of the surface modification layer improves the effect of the electrolyte solution in infiltrating the surface of the current collector, reduces interface polarization, improves the infiltration effect of the electrolyte solution for the negative electrode, and improves the kinetic performance and cycle performance of the battery.

In some embodiments, the surface modification layer is prepared by magnetron sputtering.

Magnetron sputtering is a type of physical vapor deposition. Magnetron sputtering introduces a magnetic field to a target positive electrode surface, and uses the magnetic field to constrain charged particles to increase a plasma density and a sputtering rate. Compared with a surface modification layer deposited by other means such as physical vapor deposition, the surface modification layer deposited by magnetron sputtering is more capable of alloying with the negative active material deposited on the negative electrode during charge and discharge, thereby improving the cycle performance of the secondary battery.

By means of magnetron sputtering, a surface modification layer of high mechanical strength and good ionic conductivity can be formed on the surface of the current collector. The surface modification layer can block direct contact between the negative electrode metal and the electrolyte solution constituent, reduce production of a large amount of gas caused by side reactions between the negative electrode metal and the electrolyte solution, and improve safety of the battery. In addition, the surface modification layer prepared by magnetron sputtering is stable in nature and does not react with the electrolyte solution, thereby facilitating uniform deposition of metal ions, improving the interface stability of the battery, reducing interface impedance, and improving the cycle capacity retention rate of the battery.

The thickness or density of the magnetron sputtering deposition layer can be regulated by changing the process parameters of magnetron sputtering. In some embodiments, the thickness or density of the magnetron sputtering layer is regulated by changing any parameters of the magnetron sputtering, such as radio frequency power, sputtering gas pressure, deposition rate, and sputtering time. In some embodiments, when the magnetron sputtering parameters remain constant, with the increase of the sputtering time, the magnetron sputtering layer is thicker and less dense, the pores in the magnetron sputtering layer are larger, and the contact angle of the electrolyte solution on the magnetron sputtering layer is smaller.

In some embodiments, in the magnetron sputtering, a radio frequency power is 40 to 120 W, and a sputtering time is 30 s to 60 min.

In some embodiments, the ratio frequency power of magnetron sputtering is optionally 40 W, 45 W, 50 W, 55 W, 60 W, 65 W, 70 W, 75 W, 80 W, 85 W, 90 W, 95 W, 100 W, 105 W, 110 W, 115 W, or 120 W, and the sputtering time is optionally 30 s, 35 s, 40 s, 45 s, 50 s, 55 s, 1 min, 5 min, 10 min, 15 min, 20 min, 25 min, 30 min, 35 min, 40 min, 45 min, 50 min, 55 min, or 60 min.

When the radio frequency power of magnetron sputtering is 40 to 120 W and the sputtering time is 30 s to 20 min, a uniform, dense and stable surface modification layer can be formed on the surface of the current collector. The surface modification layer can block direct contact between the negative electrode metal and the electrolyte solution constituent, reduce production of a large amount of gas caused by side reactions between the negative electrode metal and the electrolyte solution, and improve safety of the battery.

In some embodiments, the surface modification layer is in direct contact with a surface of the current collector.

In some embodiments, the coating further includes a deposition-inducing layer. The deposition-inducing layer and the surface modification layer are sequentially arranged in a direction directed away from the current collector.

In this application, the deposition-inducing layer induces uniform metal deposition by providing sufficient nucleation sites, thereby suppressing metal dendrites.

In some embodiments, the deposition-inducing layer includes a carbon material.

The deposition-inducing layer containing a carbon material favorably reduces the nucleation overpotential of metal ions, and improves the Coulombic efficiency and cycle capacity retention rate of the battery.

As used herein, the term "carbon material" means a material containing carbon. As an example, the carbon material includes but is not limited to Super P, carbon nanotubes, hard carbon, two-dimensional graphene, or graphene quantum dots.

As used herein, the term "Super P" means a grape-like carbon black formed by aggregating particles.

As used herein, the term "carbon nanotube" means a seamless hollow cylinder formed by rolling up one or more layers of graphene, with a tube diameter less than 100 nm and a tube length greater than 100 nm. As an example, the carbon nanotubes include, but are not limited to, single-walled carbon nanotubes and/or multi-walled carbon nanotubes.

As used herein, the term "hard carbon" means carbon that is difficult to graphitize.

In some embodiments, two-dimensional graphene means sheet-structured graphene that is on a nanoscale in the thickness direction (thinner than 100 nm) and more than 100 nm in dimensions in other directions. Types of the two-dimensional graphene may include monolayer graphene and/or multilayer graphene.

As used herein, the term "monolayer graphene" is a single-layer sheet structure formed by closely arranging carbon atoms periodically in a hexagonal honeycomb pattern. As an example, the thickness of the monolayer graphene is just 0.3 nm to 0.4 nm.

As used herein, the term "multilayer graphene" is prepared by stacking 2 to 10 layers of monolayer graphene, with a total thickness less than 100 nm.

As used herein, the term "graphene quantum dots" means graphene nanoparticles with a size of 100 nm or less in all dimensions.

In some embodiments, the current collector includes at least one of metal foil, a metal foam current collector, or a metal mesh current collector.

In some embodiments, the metal foil is optionally copper foil, aluminum foil, stainless steel foil, iron foil, zinc foil, or titanium foil; and the metal foam current collector is optionally copper foam, aluminum foam, zinc foam, or the like. The metal mesh current collector is optionally a copper mesh or an aluminum mesh.

The above current collectors are of high tensile strength and ductility, and are conducive to the stability and safety of the battery.

### [Secondary battery]

An embodiment of this application provides a secondary battery. The secondary battery includes a negative electrode plate. The negative electrode plate includes the current collector disclosed in some embodiments.

In some embodiments, the secondary battery is a sodium secondary battery.

In some embodiments, the secondary battery is an anode-free sodium secondary battery. The anode-free sodium secondary battery uses no negative active material, but uses a negative current collector as a negative electrode. Sodium ions are deposited on the negative electrode in an initial charging process, and then return to the positive electrode during discharge, thereby implementing a charge-discharge cycle. By employing a negative current collector but without a negative electrode material, the anode-free battery can effectively overcome the defects of the sodium metal battery and achieve a higher energy density than a metallic sodium negative electrode. Moreover, because the anode-free secondary battery contains no negative active material, the manufacturing cycle and cost of the battery can be reduced and the production efficiency of the battery can be improved while ensuring high electrochemical performance of the battery.

In some embodiments, a cell balance (CB) value of the anode-free sodium secondary battery is less than or equal to 0.1. The CB value is a ratio of the capacity per unit area of the negative electrode plate to the capacity per unit area of the positive electrode plate in the sodium secondary battery. The anode-free sodium battery contains no negative active material. Therefore, the capacity per unit area of the negative electrode plate is relatively low, and the CB value of the sodium secondary battery is less than or equal to 0.1.

The surface modification layer of the negative current collector of the anode-free sodium secondary battery can be used as an artificial SEI layer to block the side reactions between the electrolyte solution and the deposited sodium metal, regulate the uniform deposition of metal ions, suppress growth of dendrites, and maintain the overall stability of the metal negative electrode during cycling. In addition, the artificial SEI layer is of high mechanical strength sufficient to withstand the volume expansion of the negative electrode under different loads, thereby significantly reducing the gas generated by the battery during a long period of cycling, and further improving the safety of the battery.

In some embodiments, the secondary battery includes a positive electrode plate.

In some embodiments, a ratio of the thickness of the surface modification layer to a loading amount of a positive active material per unit area of the positive electrode plate is 50 to 500 nm·cm²/mAh.

Thickness of surface modification layer per unit areal capacity = thickness of surface modification layer/(theoretical gravimetric capacity of positive active material × areal density of positive active material).

In some embodiments, the thickness of the surface modification layer per unit areal capacity is optionally 50 nm·cm²/mAh, 100 nm·cm²/mAh, 150 nm·cm²/mAh, 200 nm·cm²/mAh, 250 nm·cm²/mAh, 300 nm·cm²/mAh, 350 nm·cm²/mAh, 400 nm·cm²/mAh, 450 nm·cm²/mAh, or 500 nm·cm²/mAh. The thickness of the surface modification layer may be adjusted based on the unit areal capacity of the positive active material, so as to make the thickness of the surface modification layer adaptable to the positive active materials of different types or the positive active materials loaded in different amounts. When the ratio of the thickness of the surface modification layer to the loading amount of the positive active material per unit area of the positive electrode plate is 50 to 500 nm·cm²/mAh, it is ensured that the surface modification layer is of good ionic conductivity, electronic insulativity, and high mechanical strength, thereby reducing side reactions between the electrode metal and the electrolyte solution, and improving the safety of the battery. In addition, the surface modification layer can effectively block the solvated molecules from penetrating to the negative electrode surface, and is of high ionic conductivity, thereby ensuring that the desolvated metal ions can quickly pass through the surface modification layer to reach the negative electrode surface at which the metal ions are reduced to metal by receiving electrons, thereby improving the cycle performance of the battery. In addition, the surface modification layer is of good mechanical strength, and can withstand the volume change of the negative electrode metal during charge and discharge without rupture or failure, thereby preventing re-initiation of gas production caused by reaction, and ensuring the safety of the battery during high-temperature cycling or a long period of cycling.

In some embodiments, the positive electrode plate further includes a positive active material layer formed on at least a part of surfaces of the positive current collector. The positive active material layer includes a positive active material. The positive active material may include one or more of a Prussian blue compound, a polyanionic compound, or a layered transition metal oxide.

The transition metal in the layered transition metal oxide may be at least one of Mn, Fe, Ni, Co, Cr, Cu, Ti, Zn, V, Zr, or Ce. Optionally, the layered transition metal oxide is, for example, NaₓMO₂, where M is one or more of Ti, V, Mn, Co, Ni, Fe, Cr, or Cu, and 0 < x ≤ 1.

The polyanionic compound may be a type of compound containing a metal ion, a transition metal ion, and a tetrahedral (YO₄)ⁿ⁻ anion unit. The metal ion is optionally one of a sodium ion, a lithium ion, a potassium ion, or a zinc ion. The transition metal is optionally at least one of Mn, Fe, Ni, Co, Cr, Cu, Ti, Zn, V, Zr, or Ce. Y is optionally at least one of P, S, or Si, and n denotes a valence of (YO₄)ⁿ⁻.

The Prussian blue compound may be a compound containing a sodium ion, a transition metal ion, or a cyano ion (CN⁻). The transition metal may be at least one of Mn, Fe, Ni, Co, Cr, Cu, Ti, Zn, V, Zr, or Ce. For example, the Prussian blue compound is NaₐMe_{b}Me'_{c}(CN)₆, where Me and Me' each are independently at least one of Ni, Cu, Fe, Mn, Co, or Zn, 0 < a ≤ 2, 0 < b < 1, and 0 < c < 1.

The positive active material layer may further include a conductive agent to improve the conductivity of the positive electrode. The conductive agent is optionally one or more of Super P, acetylene black, carbon black, Ketjen black, carbon dots, carbon nanotubes, graphite, graphene, or carbon nanofibers.

The positive active material layer may include a binder to firmly bind the positive active material and optionally the conductive agent onto the positive current collector. The binder is optionally at least one of polyvinylidene difluoride (PVDF), polytetrafluoroethylene (PTFE), polyacrylic acid (PAA), polyvinyl alcohol (PVA), poly(ethylene-co-vinyl acetate) (EVA), styrenebutadiene rubber (SBR), carboxymethylcellulose (CMC), sodium alginate (SA), polymethacrylic acid (PMA), or carboxymethyl chitosan (CMCS).

In some embodiments, a surface of particles of the positive active material is overlaid with a coating layer. The coating layer includes one or more of a carbon material, polyaniline (PANI), polypyrrole (PPy), poly(3,4-ethylenedioxythiophene) (PEDOT), aluminum oxide (Al₂O₃), zinc oxide (ZnO), titanium oxide (TiO₂), zirconium oxide (ZrO₂), magnesium oxide (MgO), silicon oxide (SiO₂), lanthanum oxide (La₂O₃), sodium fluoride (NaF), lithium fluoride (LiF), or aluminum fluoride (AlF₃); and the carbon material includes one or more of amorphous carbon, graphite, or graphene.

The coating layer can effectively improve the stability of the positive active material, reduce metal dissolution and particle fragmentation of the positive active material during cycling, and effectively improve the cycle performance and storage stability of the battery.

In some embodiments, the thickness of the coating layer is 2 nm to 1000 nm, and optionally 10 nm to 100 nm.

In some embodiments, the thickness of the coating layer is optionally 2 nm, 5 nm, 10 nm, 20 nm, 30 nm, 40 nm, 50 nm, 60 nm, 70 nm, 80 nm, 90 nm, 100 nm, 150 nm, 200 nm, 250 nm, 300 nm, 350 nm, 400 nm, 450 nm, or 500 nm.

The coating layer of an appropriate thickness can exert an effective improvement effect and avoid an excessive thickness of the coating layer that leads to an excessive film resistance of the positive electrode and a decline in battery performance.

In some embodiments, the positive electrode plate may be prepared according to the following method: dispersing the ingredients of the positive electrode plate such as the positive active material, the conductive agent, the binder, and any other ingredients into a solvent (such as N-methyl-pyrrolidone) to form a positive electrode slurry, coating a positive current collector with the positive electrode slurry, and performing steps such as drying and cold pressing to obtain the positive electrode plate.

In some embodiments, the secondary battery further includes an electrolyte.

The electrolyte serves to conduct ions between the positive electrode plate and the negative electrode plate. The type of the electrolyte is not particularly limited in this application, and may be selected as required. For example, the electrolyte may be in a liquid state or gel state, or all solid state.

In some embodiments, the electrolyte is an electrolyte solution. The electrolyte solution includes a sodium salt and a solvent.

In some embodiments, the sodium salt includes one or more of sodium perchlorate (NaClO₄), sodium tetrafluoroborate (NaBF₄), sodium hexafluorophosphate (NaPF₆), sodium hexafluoroarsenate (NaAsF₆), sodium trifluoroacetate (CF₃COONa), sodium tetraphenylborate (NaB(C₆H₅)₄), sodium trifluoromethanesulfonate (NaSO₃CF₃), sodium bis(fluorosulfonyl)imide (Na[(FSO₂)₂N]), or sodium bis(trifluoromethanesulfonyl)imide (Na[(CF₃SO₂)₂N]).

In some embodiments, the solvent includes one or more of monoglyme (DME), diglyme (DEGDME), triglyme (TRGDME), tetraglyme (TEGDME), 1,3-dioxolane (DOL), ethylene glycol diethyl ether (DEE), diethylene glycol diethyl ether (DEGDEE), diisopropyl ether (DIE), dibutyl ether (DBE), diethylene glycol dibutyl ether (DEGDBE), 1,4-dimethoxybutane (DMB), 1,4-diethoxybutane (DEB), tetrahydrofuran (THF), 15-crown ether-5 (15-crown-5), 12-crown ether-4 (12-crown-4), or 18-crown ether-6 (18-crown-6).

The molecules of the ether solvent can build a stable electrode/electrolyte interface on the surface of the negative electrode, form a stable solid electrolyte interface (SEI) film, alleviate electrochemical polarization, and enhance the Coulombic efficiency and cycle capacity retention rate of the battery.

Using an anode-free sodium metal battery as an example, the ether solvent is highly compatible with a sodium metal negative electrode, and can effectively passivate the sodium metal, form a thin, uniform and dense SEI film on the surface of sodium metal, further prevent the formation of sodium dendrites, and prevent the SEI film from thickening caused by growth and evolution of the sodium dendrites and from affecting ion conduction.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, after the secondary battery is charged and discharged for 50 cycles, based on a total mass of the electrolyte solution, an aggregate mass percent of elements Zn, Al, Ti, Sn, Zr, Si, and Sb in the electrolyte solution is less than 0.0001%.

When the aggregate mass percent of the elements Zn, Al, Ti, Sn, Zr, Si, and Sb in the electrolyte solution of the secondary battery based on the total mass of the electrolyte solution is less than 0.0001% after 50 charge-discharge cycles, it is definite that the surface modification layer is of good electrochemical stability, and will neither react with the electrolyte solution during the charge-discharge cycles nor fall off from the current collector surface due to dissolution in the electrolyte solution. Therefore, the surface modification layer can effectively block the reaction between the electrolyte solution and the deposited metal, and improve the cycle stability and safety of the battery.

In some embodiments, the secondary battery further includes a separator. The type of the separator is not particularly limited in this application, and may be any well-known porous separator that is highly stable both chemically and mechanically.

In some embodiments, the material of the separator may be at least one selected from polyethylene, polypropylene, polyvinylidene fluoride, aramid fiber, polyethylene terephthalate, polytetrafluoroethylene, polyacrylonitrile, polyimide, polyamide, polyester, or natural fiber. The separator may be a single-layer film or a multilayer composite film, without being particularly limited. When the separator is a multilayer composite film, materials in different layers may be identical or different, without being particularly limited.

In some embodiments, the positive electrode plate, the negative electrode plate, and the separator may be made into an electrode assembly by winding or stacking.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The soft package may be made of plastic such as polypropylene, polybutylene terephthalate, or polybutylene succinate.

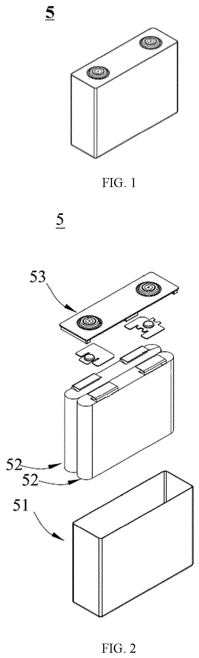

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cover plate 53. The housing 51 may include a bottom plate and a side plate connected to the bottom plate. The bottom plate and the side plate close in to form an accommodation cavity. An opening that communicates with the accommodation cavity is made on the housing 51. The cover plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, secondary batteries may be assembled to form a battery module. The battery module may include one or more secondary batteries, and the specific number of secondary batteries in a battery module may be selected by a person skilled in the art depending on practical applications and capacity of the battery module.

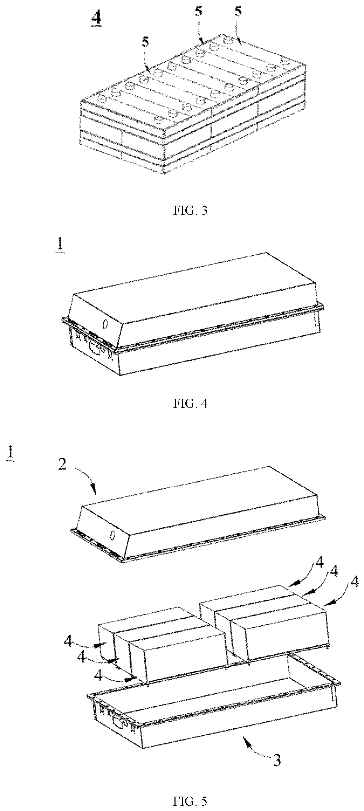

FIG. 3 shows a battery module 4 as an example. Referring to FIG. 3, in the battery module 4, a plurality of secondary batteries 5 may be arranged sequentially along a length direction of the battery module 4. Alternatively, the secondary batteries may be arranged in any other manner. Further, the plurality of secondary batteries 5 may be fixed by a fastener.

Optionally, the battery module 4 may further include a shell that provides an accommodation space. The plurality of secondary batteries 5 are accommodated in the accommodation space.

In some embodiments, the battery module may be assembled to form a battery pack. The battery pack may include one or more battery modules, and the specific number of battery modules in a battery pack may be selected by a person skilled in the art depending on practical applications and capacity of the battery pack.

FIG. 4 and FIG. 5 show a battery pack 1 as an example. Referring to FIG. 4 and FIG. 5, the battery pack 1 may include a battery box and a plurality of battery modules 4 disposed in the battery box. The battery box includes an upper box 2 and a lower box 3. The upper box 2 fits the lower box 3 to form a closed space for accommodating the battery modules 4. The plurality of battery modules 4 may be arranged in the battery box in any manner.

Further, this application provides an electrical device. The electrical device includes at least one of the secondary battery, the battery module, or the battery pack according to this application. The secondary battery, the battery module, or the battery pack may be used as a power supply of the electrical device, or used as an energy storage unit of the electrical device. The electrical device may include, but without being limited to, a mobile device (such as a mobile phone or a laptop computer), an electric vehicle (such as a battery electric vehicle, a hybrid electric vehicle, a plug-in hybrid electric vehicle, an electric bicycle, an electric scooter, an electric golf cart, or an electric truck), an electric train, a ship, a satellite system, or an energy storage system.

The secondary battery, the battery module, or the battery pack may be selected for use in the electrical device according to practical requirements of the electrical device.

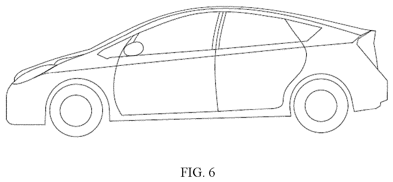

FIG. 6 shows an electrical device as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

### Embodiments

The following describes some embodiments of this application. The embodiments described below are illustrative, and are merely intended to construe this application but not to limit this application. Unless techniques or conditions are otherwise expressly specified in an embodiment hereof, the techniques or conditions described in the literature in this field or in an instruction manual of the product are applicable in the embodiment. A reagent or instrument used herein without specifying a manufacturer is a conventional product that is commercially available in the market. In the following embodiments, an example is given in which the secondary battery is a sodium-ion battery, but this application is not limited to the example.

### I. Preparation methods

### Embodiment 1

### 1) Preparing a negative current collector

Depositing tin oxide 100 nm thick as a surface modification layer on the surface of copper foil by magnetron sputtering. Parameters of the magnetron sputtering: the radio frequency power is 80 W, the sputtering time is 15 min, and the distance between the target and the substrate is 15 cm.

### 2) Preparing a positive electrode plate

Mixing Na₃V₂(PO₄)₃ as a positive active material, polyvinylidene difluoride (PVDF) as a binder, and conductive carbon black (Super P) as a conductive agent at a mass ratio of 96%: 2%: 2% in an N-methyl-pyrrolidone (NMP) solvent, stirring well to obtain a positive electrode slurry. Applying, by using an extrusion coating machine, the positive electrode slurry onto the surface of an aluminum foil at a concentration that meets the requirement on the mass of the positive active material per unit area, and then oven-drying the slurry. Cold-pressing the coated electrode plate until a compaction density of 2.5 g/cm³ by using a cold-pressing machine, so as to obtain a finished positive electrode plate.

### 3) Separator

Using a polyethylene (PE) film as a separator.

### 4) Preparing an electrolyte solution

Dissolving a sodium salt sodium hexafluorophosphate (NaPF₆) in an organic solvent monoglyme (DME) in an argon atmosphere glovebox (in which the content of H₂O is less than 0.1 ppm, and the content of O₂ is less than 0.1 ppm), and stirring well to obtain an electrolyte solution in which the concentration of NaPF₆ is 1 mol/L.

### 5) Preparing an anode-free full-cell

Stacking the positive electrode plate, the separator, and the negative current collector sequentially in such a way that the separator is located between the positive current collector and the negative current collector to serve a function of separation, and then winding the stacked structure to obtain a bare cell. Welding tabs onto the bare cell, and putting the bare cell into an aluminum shell. Dehydrating the cell by drying the cell at 80 °C, and then injecting an electrolyte solution into the aluminum shell package and sealing the package to obtain an uncharged battery. Performing steps such as static standing, hot- and cold-pressing, chemical formation, shaping, and capacity test on the uncharged cell to produce an anode-free sodium metal battery product in Embodiment 1.

The preparation methods in other embodiments and comparative embodiments are similar to the preparation method in Embodiment 1 except some adjusted parameters, as detailed in Table 1. The thickness of the magnetron sputtering layer is increased by increasing the magnetron sputtering time. With the increase of the magnetron sputtering time, the thickness of the magnetron sputtering layer increases, the pores of the magnetron sputtering layer are enlarged, the density of the magnetron sputtering layer decreases, and the contact angle of the electrolyte solution on the magnetron sputtering layer decreases.

In Embodiment 9, carbon nanotubes and sodium alginate are added into water, and stirred to form a homogeneous slurry. The slurry is applied onto a negative current collector, and oven-dried to obtain a negative current collector coated with a carbon nanotube undercoat. A sputtering layer is deposited on the current collector. The areal density of the undercoat is 20 g/m².

In Embodiment 14, the surface modification layer is deposited on the negative current collector by evaporation.

In Comparative Embodiments 1 to 3, the negative electrode plate includes no surface modification layer.

### II. Performance test

### 1. Current collector performance test

### 1) Measuring the thickness of the surface modification layer

Measuring the thickness d of the surface modification layer by using a profilometer.

### 2) Measuring the density of the surface modification layer

Measuring the mass of the current collector before and after surface modification separately by using an analytical balance, and recording the mass difference Δm between the two measured values. Measuring the thickness d of the surface modification layer by using a profilometer. Recording the area of the surface modification layer of the current collector as S, and calculating the density of the surface modification layer as: density of the surface modification layer = Δm/(S·d).

### 3) Measuring the contact angle

Measuring the contact angle by using a dynamic contact angle meter (Dataphysics OCV20, Germany). Dissolving sodium hexafluorophosphate in a monoglyme solution at 25 °C so that the concentration of the sodium hexafluorophosphate is 1 mol/L. Dripping the solution onto the current collector with a coating, and reading the contact angle value.

### 2. Testing the battery performance

1) Charging and discharging a battery for 50 cycles, and taking out the electrolyte solution in the battery to analyze the trace elements Zn, Al, Ti, Sn, Zr, Si, and Sb in the electrolyte solution.

Disassembling a battery that has been cycled for 50 cycles, and taking out the electrolyte solution. Measuring the element content in the electrolyte solution by using an inductively coupled plasma optical emission spectrometer, where the battery cell is cycled in the same way as the battery tested in the cycle capacity retention rate test. The battery here means a battery that has undergone chemical formation and capacity grading, and the number of cycles of the battery may be directly read from the corresponding software.

### 2) Expansion rate

Charging a battery at a constant current of 0.5C at room temperature (25 °C) until the voltage reaches 4 V (for a layered oxide positive electrode) or 3.7 V (for a sodium vanadium phosphate positive electrode). Charging the battery at a constant voltage until the current tapers to a low threshold indicating a full charge of the battery, and then measuring the initial volume of the battery by a drainage method. Storing the battery at room temperature for 24 days, and then taking out the battery. Measuring the volume of the battery at room temperature by using a drainage method. Calculating the volume expansion rate of the battery against the battery volume measured before storage. Calculating the volume expansion rate of the battery that has been stored at 25 °C for 24 days as: volume expansion rate (%) = (volume of the battery measured after storage/volume of the battery measured before storage) - 1.

### 3) Cycle capacity retention rate

Charging the battery at a constant current of 0.5C in a 25 °C and normal-pressure (0.1 MPa) environment until the voltage reaches 4 V (for layered oxide positive electrode) 3.5 V (for sodium vanadium phosphate positive electrode), and then discharging the battery at a constant current of 1C until the voltage drops to 2.4 V (for layered oxide positive electrode) or 3.2 V (for sodium vanadium phosphate positive electrode), thereby completing one charge-discharge cycle. Repeating the above charging and discharging process for a number of cycles, and recording the cycle capacity retention rate by assuming that the first-cycle discharge capacity is 100%. Using the normal-temperature capacity retention rate as a metric of the normal-temperature cycle performance of the battery.

### 4) Testing the interface impedance

Testing the interface impedance by using conventional electrochemical impedance spectroscopy. Applying voltage perturbation at an amplitude of 5 mV and a frequency of 100 kHz to 0.01 Hz, fitting the resultant Nyquist plot, and analyzing the plot using Zview software to obtain the interface impedance value.

### 5) Testing the nucleation overpotential

The overpotential test process is as follows: Assembling a coin cell at 25 °C by using a surface-modified current collector paired with a sodium sheet that serves as a counter electrode; and discharging the coin cell at a constant areal current density of 0.1 mA/cm² for 10 hours, during which the most negative potential obtained is recorded as the nucleation overpotential.

### 6) Testing the areal capacity of the positive active material

The areal capacity of the positive active material is obtained by multiplying the theoretical gravimetric capacity of the positive active material by the areal density of the positive active material on the positive electrode plate.

### III. Analysis on the test results of embodiments and comparative embodiments

The batteries described in the embodiments and the comparative embodiments are prepared according to the foregoing methods respectively, and performance parameters of the batteries are measured. The test results are shown in Table 1 and Table 2 below.

**Table 1 (To be continued)**

| Serial number | Magnetron sputtering layer | | | Negative electrode undercoat |
|---|---|---|---|---|
| | Type | Thickness (nm) | Density (g/cm³) | |
| Embodiment 1 | Tin oxide | 100 | 3.71 | N/A |
| Embodiment 2 | Tin oxide | 200 | 3.42 | N/A |
| Embodiment 3 | Tin oxide | 250 | 3.40 | N/A |
| Embodiment 4 | Tin oxide | 200 | 3.42 | N/A |
| Embodiment 5 | Tin oxide | 500 | 3.31 | N/A |
| Embodiment 6 | Tin oxide | 10000 | 3.06 | N/A |
| Embodiment 7 | Tin oxide | 100 | 3.71 | N/A |
| Embodiment 8 | Tin oxide | 100 | 3.71 | N/A |
| Embodiment 9 | Tin oxide | 100 | 3.73 | Carbon nanotube |
| Embodiment 10 | Antimony oxide | 100 | 2.86 | N/A |
| Embodiment 11 | Aluminum oxide | 100 | 3.15 | N/A |
| Embodiment 12 | Tin oxide | 100 | 3.71 | N/A |
| Embodiment 13 | Tin oxide | 100 | 3.71 | N/A |
| Embodiment 14 | Tin oxide (evaporation method) | 100 | 4.13 | N/A |
| Comparative Embodiment 1 | / | / | / | N/A |
| Comparative Embodiment 2 | / | / | / | N/A |
| Comparative Embodiment 3 | / | / | / | N/A |

**Table 1 (Continued)**

| Serial number | Contact angle | Positive active material | Areal loading amount (mAh/cm²) | Thickness/areal loading amount (nm·cm²/mAh) |
|---|---|---|---|---|
| Embodiment 1 | 43° | Sodium vanadium phosphate | 1 | 100 |
| Embodiment 2 | 43° | Sodium vanadium phosphate | 1 | 200 |
| Embodiment 3 | 43° | Sodium vanadium phosphate | 1 | 250 |
| Embodiment 4 | 43° | Sodium vanadium phosphate | 2 | 100 |
| Embodiment 5 | 42° | Sodium vanadium phosphate | 2 | 250 |
| Embodiment 6 | 39° | Sodium vanadium phosphate | 3 | 3333 |
| Embodiment 7 | 43° | Sodium vanadium phosphate | 0.5 | 200 |
| Embodiment 8 | 43° | Sodium vanadium phosphate | 2 | 50 |
| Embodiment 9 | 43° | Sodium vanadium phosphate | 1 | 100 |
| Embodiment 10 | 45° | Sodium vanadium phosphate | 1 | 100 |
| Embodiment 11 | 55° | Sodium vanadium phosphate | 1 | 100 |
| Embodiment 12 | 43° | NaNi_{0.33}Fe_{0.33}Mn_{0.34}O₂ | 1 | 100 |
| Embodiment 13 | 43° | NaNi_{0.33}Fe_{0.33}Mn_{0.34}O₂@C | 1 | 100 |
| Embodiment 14 | 45° | Sodium vanadium phosphate | 1 | 100 |
| Comparative Embodiment 1 | 58° | Sodium vanadium phosphate | 1 | / |
| Comparative Embodiment 2 | 58° | NaNi_{0.33}Fe_{0.33}Mn_{0.34}O₂ | 1 | / |
| Comparative Embodiment 3 | 58° | NaNi_{0.33}Fe_{0.33}Mn_{0.34}O₂@C | 1 | / |

**Table 2**

| Serial number | Battery | | | | |
|---|---|---|---|---|---|
| | Mass percent of specified element after 50 cycles (%) | Expansion rate | Interface impedance (Ω) | Cycle capacity retention rate | Nucleation overpotential (mV) |
| Embodiment 1 | < 0.0001 | 5% | 0.31 | 96% | 6 |
| Embodiment 2 | < 0.0001 | 2% | 0.42 | 95% | 6 |
| Embodiment 3 | < 0.0001 | 1% | 0.53 | 95% | 6 |
| Embodiment 4 | < 0.0001 | 3% | 0.44 | 92% | 6 |
| Embodiment 5 | < 0.0001 | 2% | 1.16 | 89% | 8 |
| Embodiment 6 | < 0.0001 | 1% | 4.32 | 52% | 8 |
| Embodiment 7 | < 0.0001 | 7% | 0.31 | 86% | 6 |
| Embodiment 8 | < 0.0001 | 3% | 0.31 | 95% | 6 |
| Embodiment 9 | < 0.0001 | 5% | 0.35 | 96% | 12 |
| Embodiment 10 | < 0.0001 | 5% | 0.53 | 95% | 8 |
| Embodiment 11 | < 0.0001 | 5% | 12.74 | 28% | 62 |
| Embodiment 12 | < 0.0001 | 5% | 0.31 | 93% | 6 |
| Embodiment 13 | < 0.0001 | 5% | 0.31 | 92% | 6 |
| Embodiment 14 | < 0.0001 | 7% | 0.42 | 93% | 6 |
| Comparative Embodiment 1 | / | 16% | 0.51 | 86% | 40 |
| Comparative Embodiment 2 | / | 16% | 1.21 | 65% | 40 |
| Comparative Embodiment 3 | / | 16% | 0.81 | 77% | 40 |

The above test results show that the current collector in Embodiments 1 to 14 contains a coating. The coating includes at least a surface modification layer. The coating is formed on at least one side of the current collector. A thickness of the surface modification layer is 100 nm to 10 µm. As can be seen from Embodiments 1 to 14, a surface modification layer is formed on one side of the negative current collector to serve as a coating of the current collector. The surface modification layer can block direct contact between the sodium metal and the electrolyte solution, thereby reducing side reactions between the sodium metal and the electrolyte solution, significantly reducing gas generated due to side reactions during a long period of cycling of the battery, and improving the safety of the battery.

As can be seen from Embodiments 1 to 5 and 7 to 9 versus Comparative Embodiment 1, the surface modification layer with a thickness of 100 nm to 500 nm can further reduce the interface impedance of the battery, and improve the cycle capacity retention rate of the battery.

As can be seen from the embodiment versus the comparative embodiment, at 25 °C, the contact angle of the monoglyme solution on the current collector with a magnetron sputtering layer is less than 50°, where the monoglyme solution contains sodium hexafluorophosphate at a concentration of 1 mol/L. The magnetron sputtering layer significantly improves the surface wettability of the negative current collector, and improves the kinetic performance of the battery.

As can be seen from Embodiments 1 to 11 versus Comparative Embodiment 1, tin oxide and antimony oxide can more effectively reduce the interface impedance of the anode-free battery than aluminum oxide, thereby further improving the electrochemical performance of the battery while improving the safety performance of the battery.

As can be seen from Embodiment 1 versus Embodiment 14, in contrast to the surface modification layer deposited by evaporation, the surface modification layer deposited by magnetron sputtering makes the battery more resistant to expansion, and endows the battery with a lower interface impedance and a more excellent cycle capacity retention rate.

As can be seen from Embodiments 1 to 14, each anode-free sodium battery disclosed herein includes a negative current collector containing a surface modification layer. After the anode-free sodium battery is charged and discharged for 50 cycles, based on the total mass of the electrolyte solution, the aggregate mass percent of elements Zn, Al, Ti, Sn, Zr, Si, and Sb in the electrolyte solution is less than 0.0001%. This indicates that the surface modification layer is of high stability, and is not prone to fall off during cycling or to react with the electrolyte solution.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. In addition, all kinds of variations of the embodiments conceivable by a person skilled in the art and any other embodiments derived by combining some constituents of the embodiments hereof without departing from the subject-matter of this application still fall within the scope of this application.

## Claims

1. A current collector with a coating, **characterized in that** the coating comprises at least a surface modification layer, the coating is formed on at least one side of the current collector, and a thickness of the surface modification layer is 100 nm to 10 µm.

2. The current collector according to claim 1, **characterized in that** the thickness of the surface modification layer is 100 nm to 500 nm.

3. The current collector according to claim 1 or 2, **characterized in that** a density of the surface modification layer is 1.7 to 5.5 g/cm³, and optionally 2.5 to 5.2 g/cm³.

4. The current collector according to any one of claims 1 to 3, **characterized in that** the surface modification layer comprises one or more of zinc oxide, aluminum oxide, titanium oxide, tin oxide, zirconium oxide, silicon oxide, or antimony oxide.

5. The current collector according to any one of claims 1 to 4, **characterized in that** at 25 °C, a contact angle of a monoglyme solution on the current collector with the coating is less than 50°, wherein the monoglyme solution contains sodium hexafluorophosphate at a concentration of 1 mol/L.

6. The current collector according to any one of claims 1 to 5, **characterized in that** the surface modification layer is prepared by magnetron sputtering.

7. The current collector according to claim 6, **characterized in that** in the magnetron sputtering, a radio frequency power is 40 to 120 W, and a sputtering time is 30 s to 60 min.

8. The current collector according to any one of claims 1 to 7, **characterized in that** the surface modification layer is in direct contact with a surface of the current collector.

9. The current collector according to any one of claims 1 to 7, **characterized in that** the coating further comprises a deposition-inducing layer, and the deposition-inducing layer and the surface modification layer are sequentially arranged in a direction directed away from the current collector.

10. The current collector according to claim 9, **characterized in that** the deposition-inducing layer comprises a carbon material.

11. The current collector according to any one of claims 1 to 10, **characterized in that** the current collector comprises at least one of metal foil, a metal foam current collector, or a metal mesh current collector.

12. A secondary battery, **characterized in that** the secondary battery comprises a negative electrode plate, and the negative electrode plate comprises the current collector according to any one of claims 1 to 11.

13. The secondary battery according to claim 12, **characterized in that** the secondary battery is a sodium secondary battery.

14. The secondary battery according to claim 12 or 13, **characterized in that** the secondary battery is an anode-free sodium secondary battery.

15. The secondary battery according to any one of claims 12 to 14, **characterized in that** the secondary battery comprises a positive electrode plate, and a ratio of the thickness of the surface modification layer to a loading amount of a positive active material per unit area of the positive electrode plate is 50 to 500 nm·cm²/mAh.

16. The secondary battery according to any one of claims 12 to 15, **characterized in that** the secondary battery comprises an electrolyte solution, the electrolyte solution comprises a sodium salt, and the sodium salt comprises one or more of sodium perchlorate, sodium tetrafluoroborate, sodium hexafluorophosphate, sodium hexafluoroarsenate, sodium trifluoroacetate, sodium tetraphenylborate, sodium trifluoromethanesulfonate, sodium bis(fluorosulfonyl)imide, or sodium bis(trifluoromethanesulfonyl)imide.

17. The secondary battery according to any one of claims 12 to 16, **characterized in that**, after the secondary battery is charged and discharged for 50 cycles, based on a total mass of the electrolyte solution, an aggregate mass percent of elements Zn, Al, Ti, Sn, Zr, Si, and Sb in the electrolyte solution is less than 0.0001%.

18. An electrical device, **characterized in that** the electrical device comprises the secondary battery according to any one of claims 12 to 17.
